# EUROPÄISCHE PATENTANMELDUNG

(11) **EP 0 629 487 A1**
(43) Veröffentlichungstag der Anmeldung: **21.12.1994**
(21) Anmeldenummer: 94108403.0
(22) Anmeldetag: 01.06.1994
(51) Int. Cl.: B29C 63/00, B29C 63/04, B29C 51/16, B29C 51/42, B32B 31/00, B29C 45/00, B29C 45/06

(54) **Verfahren und Vorrichtung zum Herstellen von laminierten Kunststoff-Formteilen**

(30) Priorität: 04.06.1993 DE 4318574
(71) Anmelder: Battenfeld GmbH, D-58540 Meinerzhagen (DE)
(72) Erfinder: Eckardt, Helmut, Dipl.-Ing., D-58540 Meinerzhagen (DE)
(74) Vertreter: Müller, Gerd, Dipl.-Ing.

(57) **Zusammenfassung**

Bei einem Verfahren zum Herstellen von laminierten Kunststoff-Formteilen (8), die aus einem spritzgegossenen Grundkörper (2 bis 6) aus thermoplastischem Kunststoff-Material und mindestens einer Deckschicht (7) bestehen, wobei die den Grundkörper aufnehmende Werkzeughälfte (11a, 12a) der Spritzgießform temporär in Deckungslage mit einer komplementären Werkzeughälfte (12b) einer Preßform gebracht wird, die die Deckschicht gegen den Grundkörper preßt und an diesen laminiert, wird zwischen dem Spritzgießen und dem laminierenden Präge- bzw. Kaschiervorgang die der Deckschicht (7) zugewandte Seite des spritzgegossenen Grundkörpers (2 bis 6) aufgeheizt. Zu diesem Zweck ist einer Spritzeinheit (9) eine Schließeinheit (10) mit mindestens zwei Werkzeugen (11, 12) aus jeweils zwei Werkzeughälften zugeordnet, von denen eine Werkzeughälfte des zweiten Werkzeugs (12) als Preßform-Werkzeughälfte (12b) mit einer dem Grundkörper (2 bis 6) zuzüglich Deckschicht (7) entsprechenden Kontur ausgebildet und dem ersten oder dem zweiten Werkzeug (11, 12) eine zwischen die geöffneten Werkzeughälften einfahrbare Heizvorrichtung (21) zugeordnet ist.

## Beschreibung

Die Erfindung betrifft ein Verfahren und eine Vorrichtung zum Herstellen von laminierten Kunststoff-Formteilen, die aus einem spritzgegossenen Grundkörper aus thermoplastischem Kunststoffmaterial und mindestens einer Deckschicht bestehen, wobei die den Grundkörper aufnehmende Werkzeughälfte der Spritzgießform temporär in Deckungslage mit einer komplementären Werkzeughälfte einer Preßform gebracht wird, die die Deckschicht gegen den Grundkörper preßt und an diesen laminiert.

Ein Verfahren und eine Vorrichtung dieser Art sind durch die DE-41 01 106 A1 bekannt. In einer vertikal schließenden Spritzgießmaschine von üblicher Bauart ist der Spritzkopf der Spritzgießmaschine an ein Spritzgießwerkzeug anschließbar, das aus einer oberen Formhälfte und einem heb- und senkbaren, an Führungssäulen geformtem Formoberteil besteht. In der Spritzgießposition bilden die untere Formhälfte und das Formoberteil einen geschlossenen Formhohlraum, in den mittels des Spritzkopfes thermoplastischer Kunststoff einspritzbar ist, um einen Formling bzw. Grundkörper von gewünschter Formgebung herzustellen. Nach Beendigung des Spritzgießens des Grundkörpers wird der Spritzkopf von dem Formwerkzeug weggefahren und das Formoberteil angehoben. Der Grundkörper verbleibt in der unteren, auf einem Karuselltisch um eine vertikale Achse drehbaren Formhälfte des Formwerkzeuges. Durch eine Drehung um 180° wird die untere Formhälfte mit dem noch nicht erstarrten Grundkörper in eine Position gebracht, in der sie sich unter einer oberen Formhälfte befindet und mit dieser zusammen eine Preßform bildet. In dieser Betriebsposition wird auf den Grundkörper eine Deckschicht aus flexiblem Material aufgelegt. Beim Absenken der oberen Formhälfte wird die Deckschicht gegen die Oberseite des noch nicht erstarrten Grundkörpers gepreßt und mit diesem verbunden. Auf dem Karuselltisch sind zwei identische untere Formhälften angeordnet, und jeweils eine davon bildet zusammen mit dem Formoberteil das Spritzgießwerkzeug, während gleichzeitig die andere, untere Formhälfte mit der oberen Formhälfte der Preßform zusammenwirkt. Es lassen sich daher in jedem Arbeitstakt sowohl ein Grundkörper durch Spritzgießen formen als auch ein im vorherigen Takt geformter Grundkörper mit der Deckschicht verpressen.

Bei dieser bekannten Spritzgieß- und Kaschiertechnik wird somit das Werkzeug, in dem das Kunststoffteil bzw. der Grundkörper gespritzt wurde, so früh geöffnet, daß der Kunststoff noch nicht ganz erstarrt ist. Der Grundkörper wird danach - das vorherige Drehen der Formhälfte in die neue Betriebsposition vorausgesetzt - mit dem Beschichtungsmaterial, z. B. Gewebe, Leder oder Kunstleder, Schaumstoff, Textil, Stoff oder dergleichen, das entweder als Materialbahn von einer Rolle über ein Vorschubgerät oder als vorgeformter oder nicht vorgeformter Ausschnitt zugeführt wird, in einem anschließenden Preßvorgang verbunden. Als nachteilig ist bei diesem Verfahren zu sehen, daß der Grundkörper, je nach Öffnungszeitpunkt des Werkzeugs, an seiner Oberfläche entweder schon unerwünscht stark erkaltet ist, oder - wenn das Werkzeug sehr früh geöffnet wird - noch so schmelzflüssig ist, daß es zu einem Kleben des Kunststoffes an den Formwandungen des Werkzeugs kommt. Um ein vollständiges Ablösen des Formoberteils in dem noch nicht erstarrten Grundkörper und dessen vollständiges Verbleiben in der unteren Formhälfte sicherzustellen, ist es dort deshalb erforderlich, ein Trennmittel auf die Formfläche des Formoberteils aufzubringen oder diese Formfläche gar in einer Sonderbauweise mit einem haftungsmindernden Material wie Teflon, Kohlenstoff oder dergleichen bleibend zu beschichten bzw. das gesamte Formoberteil aus einem entsprechenden Material, z. B. kohlefaserverstärktem Kohlenstoff, herzustellen.

Bei anderen bekannten Verfahren werden die entsprechenden Beschichtungs- bzw. Papiermaterialien zunächst in das Werkzeug eingelegt und danach der Kunststoff in das Spritzgießwerkzeug in der Weise eingespritzt, daß er die gewünschte Kontur einnimmt und gleichzeitig den Stoff in der gewünschten Weise verformt. Dabei ist allerdings sehr problematisch, daß zum Spritzgießen von Kunststoffen recht hohe Werkzeug-Innendrücke erforderlich sind, die sich aber nachteilig auf das Beschichtungsmaterial auswirken. Es sind daher auch Verfahren bekannt, bei denen der Kunststoff zunächst in ein leicht geöffnetes Werkzeug eingespritzt und dann mittels eines Spritzprägeverfahrens durch gesteuertes Zufahren des Werkzeuges über die gewünschte Fläche verteilt und somit ein weitestgehend gleichmäßiger Druck auf das Beschichtungsmaterial aufgebracht wird. Nachteilig ist dabei allerdings, daß die optimalen Drücke zum Formen des Grundkörpers und zum Formen des Beschichtungsmaterials nicht gleich sein können, so daß sich aufgrund zu hoher Drücke häufig Beschädigungen und Verhärtungen des hinterspritzten Beschichtungsmaterials einstellen. Schließlich kann es auftreten, daß der schmelzflüssige Kunststoff in das Gewebe einer als Beschichtungsmaterial bspw. verwendeten Stoff- oder Textilbahn eindringt und diese somit verhärtet.

Der Erfindung liegt daher die Aufgabe zugrunde, ein Verfahren und eine Vorrichtung zu schaffen, mit denen sich die beschriebenen Nachteile vermeiden lassen und das eingangs genannte Herstellen von laminierten bzw. beschichteten Kunststoff-Formlingen vereinfachen und verbessern läßt.

Diese Aufgabe wird mit einem Verfahren dadurch gelöst, daß zwischen dem Spritzgießen und dem laminierenden Präge- bzw. Kaschiervorgang die der Deckschicht zugewandte Seite des spritzgegossenen Grundkörpers aufgeheizt wird. Durch das vorzugsweise gesteuerte Aufheizen mittels einer gemäß einem Vorschlag der Erfindung nach dem Öffnen der Spritzgießform zwischen deren oder den Werkzeughälften der Prägeform einfahrbaren Heizvorrichtung läßt sich zwischen dem Spritzgießvorgang und dem Präge- bzw. Kaschiervorgang und zwar entweder, in der Spritzgieß- oder in der Kaschierposition, die dem Beschichtungsmaterial, z. B. Stoff oder Textilband, abgewandte Seite des Grundkörpers kontrolliert auf eine solch hohe Temperatur bringen, die eine sichere Haftung mit dem Beschichtungsmaterial gewährleistet.

Obwohl das Spritzgießen des Grundkörpers und das Kaschieren bzw. Prägen im gleichen Arbeitsgang vorgenommen werden können, wozu vorteilhaft mindestens zwei Paar von Werkzeughälften vorgesehen sind, lassen sich beide Verfahrensschritte unabhängig voneinander optimal steuern, insbesondere mit der zwischengeschalteten Beheizung des Grundkörpers eine präzise Steuerung seiner Außentemperatur erreichen. Die Temperatur kann so eingestellt werden, daß die Außenschicht des Grundkörpers sogar schmelzflüssig, das heißt gut klebend wirkt, während dennoch seine Kontur präzise und genau ausgebildet ist. Ein Verkleben oder Verformen, wie das bei dem bekannten Verfahren aufgrund eines im Interesse einer noch akzeptablen hohen Temperatur des Grundkörpers aufgrund eines zu frühen Öffnens der Werkzeughälften vorkommt, läßt sich sicher vermeiden. Es wird nämlich der Spritzgießvorgang mit beim Spritzgießen üblichen Bedingungen durchgeführt. Erst nach dem Öffnen des Werkzeuges wird, solange sich der Grundkörper bzw. das Formteil noch auf der Kernseite befindet, durch die Heizvorrichtung, die vorzugsweise der Geometrie des Grundkörpers angepaßt ist, der Grundkörper dort erwärmt, wo es gewünscht wird.

Eine Vorrichtung zum Durchführen des erfindungsgemäßen Verfahrens sieht vor, daß einer Spritzeinheit eine Schließeinheit mit mindestens zwei Werkzeugen aus jeweils zwei Werkzeughälften zugeordnet ist, von denen eine Werkzeughälfte des zweiten Werkzeugs als Preßform-Werkzeughälfte mit einer dem Grundkörper zuzüglich Deckschicht entsprechenden Kontur ausgebildet und dem ersten oder dem zweiten Werkzeug die zwischen die beiden geöffneten Werkzeughälften einfahrbare Heizvorrichtung zugeordnet ist. Der nach dem Aufheizen einseitig auf eine gewünschte Temperatur erhitzte Grundkörper läßt sich anschließend in eine Deckungslage mit der Preßform-Werkzeughälfte bringen, um das dort zugeführte Beschichtungsmaterial der Deckschicht aufbringen bzw. an den Körper anpressen zu können. Die Preßform-Werkzeughälfte braucht nicht mehr auf die Drücke eines Spritzgießwerkzeuges ausgelegt zu sein, sondern sie ist als Präge- oder Kaschierhälfte mit allen Möglichkeiten der Kaschiertechnik konzipiert. Durch das gezielte Aufheizen der zu beschichtenden Seite des Grundkörpers läßt sich eine innige, feste Verbindung zwischen dem Grundkörper und der Deckschicht erreichen, ohne daß - wie bei der konventionellen Kaschiertechnik üblich - ein Kleber am Grundkörper oder der Deckschicht notwendig ist.

Bei artgleichen Materialien, das heißt wenn sowohl der Grundkörper als auch die Deckschicht bspw. auf PP-Basis sind, ergibt sich ein 100 %ige Recyclingfähigkeit. Da der Grundkörper bereits vor der Beschichtung fertig ausgespritzt wurde, sind zum Beschichten keine hohen Drücke mehr erforderlich, was bedeutet, daß keine örtlichen Druckspitzen bzw. hohen Druckbelastungen auf das Beschichtungsmaterial einwirken. Die benötigten Drücke sind sehr gering; sie müssen lediglich einen Kontakt zwischen der angeschmolzenen Oberfläche des Grundkörpers und dem Beschichtungsmaterial ermöglichen. Weil kein direktes Fließen des Kunststoffes mehr stattfindet, kann dieser auch nicht in das Beschichtungsmaterial eindringen, was es entbehrlich macht, z. B. beschichtete bzw. mit Folie versiegelte Stoffe oder Textilien zu verwenden, woraus sich Kostenvorteile für das Beschichtungsmaterial ergeben. Während lediglich für den Kaschier- oder Beschichtungsvorgang auf der dem Beschichtungsmaterial zugewandten Seite eine Werkzeughälfte eingesetzt wird, die speziell auf die Anforderungen der Beschichtung bzw. Kaschierung abgestimmt ist, kommen hingegen für das Spritzgießen übliche Spritzgießwerkzeuge zum Einsatz.

Wenn die dem Preßform-Werkzeug gegenüberliegenden Werkzeughälften auf einem drehbaren Tragelement, z. B. einem Drehtisch, einem mehrarmigen Schwenkträger etc. angeordnet sind, wird in an sich bekannter Weise erreicht, daß die Werkzeughälfte mit dem auf eine gewünschte Temperatur erhitzten Grundkörper beim Verschwenken des Tragelementes in die Kaschier- bzw. -prägeposition gelangt, in der die zuvor zum Spritzgießen eingesetzte Werkzeugformhälfte dann mit der Preßform-Werkzeughälfte zusammenwirkt, während gleichzeitig die Werkzeughälfte mit dem laminierten Grundkörper in die Spritzgießposition gelangt, so daß sich - sobald der laminierte Grundkörper entnommen werden ist - ein neuer Spritzvorgang anschließen kann. Eines maschinenseitigen Drehtisches bzw. Schwenkträgers bedarf es nicht, wenn die Werkzeuge in sich als Drehwerkzeuge ausgebildet sind.

Nach einem Vorschlag der Erfindung kann die Heizvorrichtung aus Platten aus gut leitendem Metall bestehen und können ihr in der Außerbetriebsposition, extern der Schließeinheit Aufheizmittel zugeordnet sein. Alternativ lassen sich die Heizplatten auch unmittelbar in der Näher der zu beheizenden Fläche, das heißt des Grundkörpers aufheizen, z. B. durch den Einsatz schnell wirksamer Heizvorrichtungen wie Heizwendeln.

Für die Heizvorrichtung, die den Grundkörper durch Strahlung, Konvektion oder Infrarot erhitzen kann, ergibt sich bei einem Aufbau mit Platten als Heizelemente eine sehr einfache Bauweise; als Material für die Platten eignet sich Aluminium, Berylliumkupfer, Messing, Kupfer oder dergleichen. Das externe Aufheizmittel, bspw. ein außerhalb der Maschine angeordneter Wärmeschrank, in den sich die Heizvorrichtung einbringen läßt, erlaubt ein einfaches Aufheizen der Heizelemente. Sobald dann nach dem Spritzgießen das Werkzeug geöffnet worden ist, können die extern aufgeheizten Heizelemente bzw. -platten in nur wenigen Sekunden oberhalb oder in unmittelbare Nähe des gespritzten Grundkörpers gebracht werden, so daß sich durch Wärmestrahlung der gewünschte Aufheizeffekt und das Anschmelzen der Oberfläche des Grundkörpers erreichen lassen.

Es wird vorgeschlagen, daß der Abstand der Werkzeughälfte der Preßform zu den ihr temporär zugeordneten Werkzeughälften der Spritzgießform einstellbar ist, wozu sich die Preßform-Werkzeughälfte vorteilhaft mit einem Abstands-Stellmittel versehen läßt, das z. B. ein eine stufenlose Verstellung ermöglichender Anstellkeil sein kann; alternativ können auch Abstandshalter eingesetzt werden, die durch stufenweise Verstellungen ein individuelles Anpassen an die jeweils gewünschte Gesamtwanddicke (Grundkörper + Deckschicht) erlauben. Diese Abstands- bzw. Höhenanpassung zwischen den beiden Werkzeughälften ist dann erforderlich, wenn bei gleichem Formnest die Dicke des für die Deckschicht zugeführten Materials wechselt. Derartige Anstellmittel können allerdings dann entfallen, wenn für jedes Werkzeug eine eigene Schließplatte vorgesehen ist; in diesem Fall läßt sich durch unterschiedliches Fahren von Geschwindigkeit und Druck eine optimale Anpassung für beide Werkzeuge individuell erreichen.

Eine Ausgestaltung der Erfindung sieht vor, daß in der Preßform-Werkzeughälfte mindestens ein Schieber angeordnet ist. Da das die Kaschierungen bzw. das Prägen vornehmende Werkzeug nicht für große Drücke ausgelegt werden muß, ermöglichen es die in die Werkzeughälfte integrierten verschiebbaren Einsätze bzw. Schieber, noch bzw. schon im geschlossenen Zustand des Werkzeugs den Stoff bzw. die Beschichtung in eine solche Richtung zu bringen, daß ein Umbug entsteht.

Wenn vorteilhaft der bzw. die Schieber bezogen auf den Grundkörper unter einem Winkel mit einem sich allmählich verengenden Spalt angeordnet sind, läßt sich ein schonendes Umformen der Kaschierung und Aufbringen an den Grundkörper bzw. das Formteil erreichen. Es können bspw. einer oder mehrere Schieber durch getrennte Antriebe in unterschiedlichen Winkeln das Kaschiermittel mit einer möglichst schonenden Verformung bei dennoch gleichzeitig innigem Kontakt zum Spritzgießformteil um dieses herumziehen. Um die Verformung und Anpressung zu erreichen, können beide Antriebe eines Schiebers zielgemäß gemeinsam gesteuert werden. Der Antrieb kann elektrisch, hydraulisch oder auf andere Weise erfolgen.

Gemäß einer weiteren Ausführung ist vorteilhaft das Preßform- bzw. Kaschierwerkzeug mit einem Stanzwerkzeug versehen. In diesem Fall, wenn kein Umbug erforderlich ist, findet gleichzeitig mit dem Kaschieren ein Besäumen der überstehenden Ränder des Kaschierstoffes mit bekannten Stanzmitteln statt.

Eine alternative Ausgestaltung sieht vor, daß dem Spritz- und dem Formwerkzeug ein Stanzwerkzeug nachgeschaltet ist. Das Stanzen bzw. Besäumen ist somit aus dem eigentlichen Kaschiervorgang herausgenommen und schließt sich diesem an, so daß das fertig kaschierte Formteil nach dem Drehen aus der Kaschierposition in Eingriff mit der Stanzvorrichtung kommt.

Es kann zweckmäßig sein, den mindestens zwei Verfahrensschritten, nämlich das Spritzgießen und das Kaschieren bzw. Prägen, einen Entformungsschritt nachzuschalten. Hierzu sind dann drei Werkzeugunterteile und zwei -oberteile erforderlich. Das auf dem Werkzeugunterteil befindliche Formteil wird in eine gut zugängliche Position gebracht, in der es sich entformen läßt. Ist dem Kaschieren noch en Stanzvorgang nachgeschaltet, so würde das Entformen in einer virten Station stattfinden; beim Einsatz eines die Werkzeuge tragenden Drehtisches würden die Drehbewegungen somit jeweils 90° betragen, und es sind vier Werkzeugunter- und drei Werkzeugoberteile notwendig.

Weitere Merkmale und Vorteile der Erfindung ergeben sich aus den Ansprüchen und der nachfolgenden Beschreibung, in der einige Ausführungsbeispiele des Gegenstandes der Erfindung näher erläutert sind. Es zeigen in schematischer Darstellung:
- Figur 1: eine Anlage zum Herstellen laminierter Kunststoff-Formteile mit horizontaler Schließ- und Spritzeinheit, in der Draufsicht;
- Figur 2: eine Ausführung der Anlage gemäß Figur 1 mit demgegenüber in der Trennebene der Werkzeughälften angeordneter Spritzeinheit;
- Figur 3: eine Ausführung einer Anlage zum Herstellen von laminierten Kunststoff-Formteilen mit vertikal schließender Schließeinheit und den spritzseitigen Werkzeughälften individuell zugeordneten Schließplatten, in der Seitenansicht;
- Figuren 4a bis 4g: das Spritzen eines laminierten Kunststoff-Formteils in den der Spritzfolge entsprechenden Sektionen dargestellt;
- Figur 5: zwei andere Konturen von mit den Anlagen gemäß den Figuren 1 bis 3 herzustellenden laminierten Kunststoff-Formteilen;
- Figur 6: die Kontur eines Kunststoff-Formteils, das eine fast parallel zur Öffnungsbewegung der Werkzeughälften zu spritzende Fläche aufweist;
- Figuren 7a bis 7g: das Herstellen des in Figur 6 gezeigten Kunststoff-Formteils in den der Spritzfolge entsprechenden Sektionen dargestellt;
- Figuren 8a bis 8d: das Herstellen eines laminierten Kunststoff-Formteils, bei dem die Deckschicht einen Umbug aufweist, in vier aufeinanderfolgenden Arbeitsgängen dargestellt;
- Figur 9: eine der Figur 1 entsprechende Anlage mit einem der Preßform-Werkzeughälfte zugeordneten Anstellkeil;
- Figur 10: als Einzelheit die Anordnung der Heizvorrichtung bezogen auf die Position des Kunststoff-Formteils; und
- Figur 11a, 11b: als Einzelheit ein Stanzwerkzeug, vor (vgl. Figur 11a) und nach (vgl. Figur 11b) dem Besäumen des Kaschierstoffes.

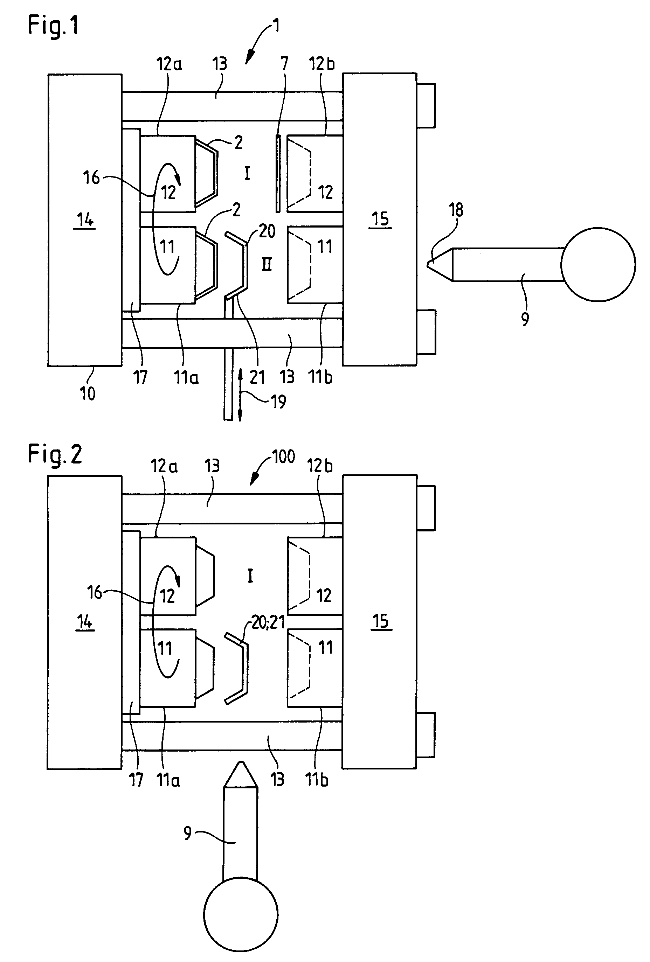

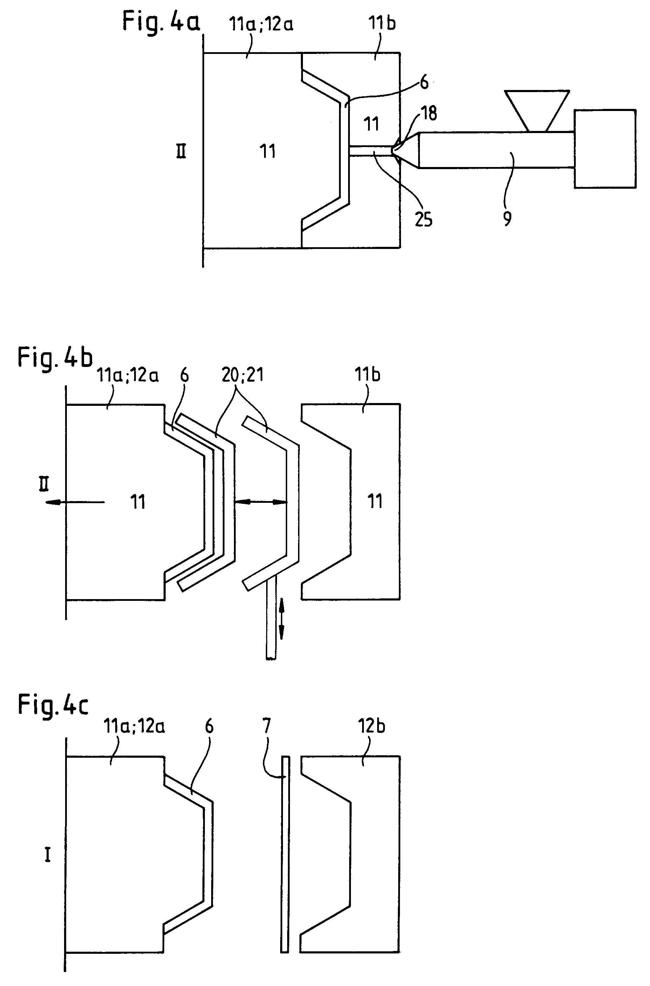

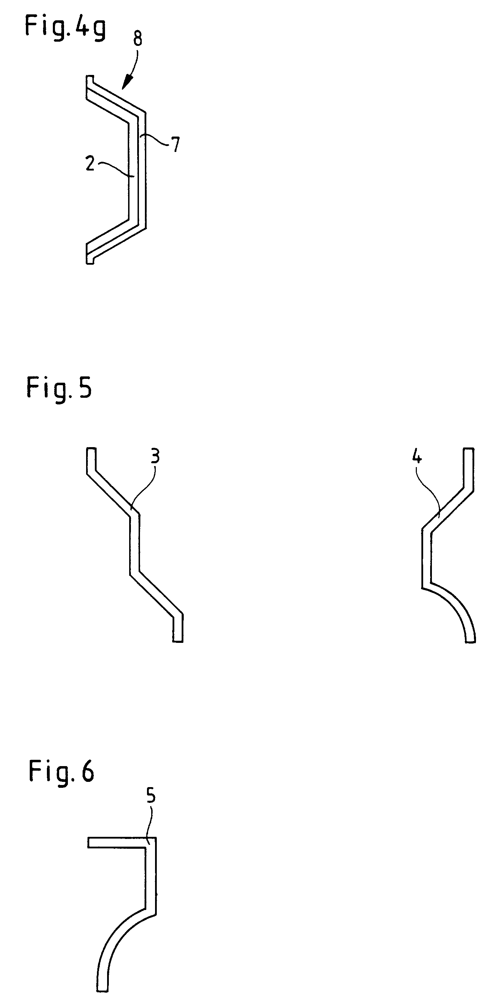

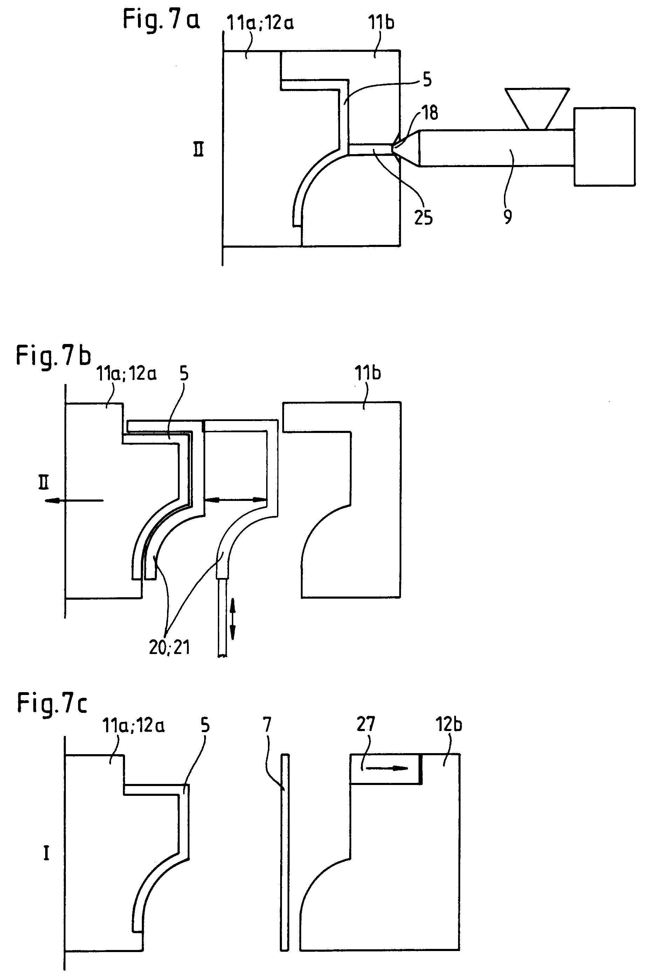

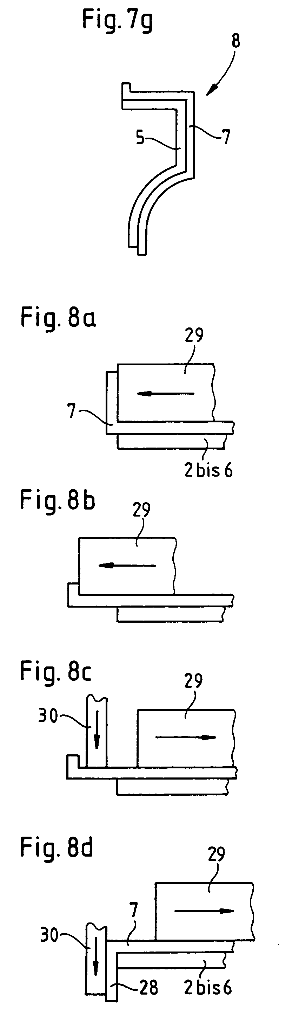

Eine Anlage bzw. Spritzgießmaschine 1 zum Spritzgießen zunächst eines Grundkörpers 2 bzw. 3, 4 (vgl. Figur 5) oder 5 (vgl. Figur 6) bzw. 6 (vgl. die Figuren 4a bis 4d) und anschließenden Laminieren des Grundkörpers 2 bis 6 mit einer Deckschicht 7 in Form bspw. von zugeführtem Stoff, Textil, Teppich, Folie etc., so daß ein laminiertes Kunststoff-Formteil 8 (vgl. bspw. die Figuren 4g und 7g) entsteht, besteht gemäß Figur 1 aus einer horizontalen Spritzeinheit 9 und einer horizontalen Schließeinheit 10. Diese umfaßt ein erstes und ein zweites Werkzeug 11 bzw. 12, die jeweils aus den schließseitigen Werkzeughälften 11a, 12a und den düsenseitigen Werkzeughälften 11b, 12b bestehen. Die düsenseitigen Werkzeughälften 11b, 12b sind auf einer auf Säulen 13 in Richtung einer schließseitigen Maschinenplatte 14 beweglichen Schließplatte 15 und die schließseitigen Werkzeughälften 11a, 12a sind auf einem in Richtung des Drehpfeils 16 verstellbaren Drehtisch 17 angeordnet. Das erste Werkzeug 11 bildet mit seinen in der Betriebsposition aufeinanderzubewegten Werkzeughälften 11a, 11b einen geschlossenen Formhohlraum, in den mittels des Spritzkopfes 18 der Spritzeinheit 9 thermoplastischer Kunststoff einspritzbar ist, um einen Grundkörper 2 bis 7 von gewünschter Formgebung bzw. Kontur herzustellen.

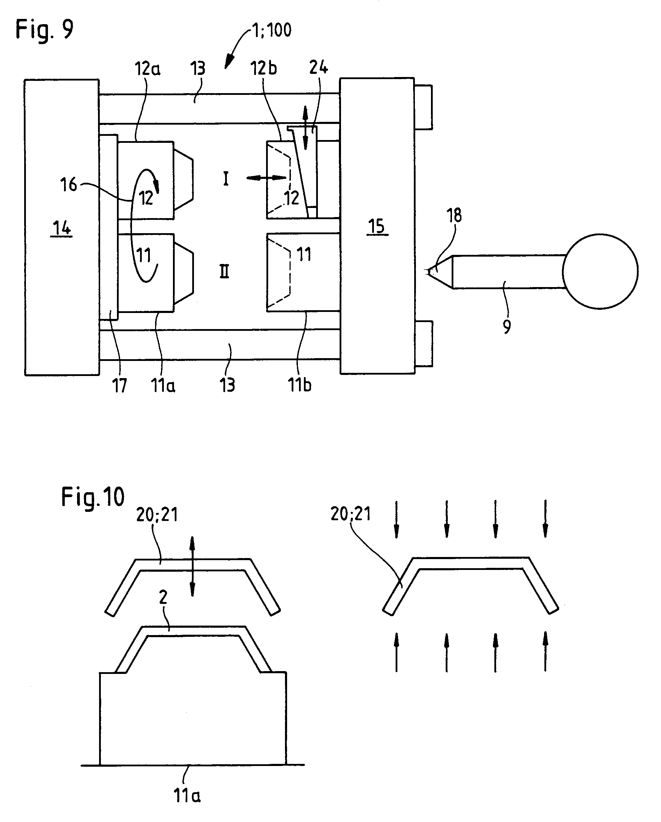

Nach Beendigung des Spritzgießens des Grundkörpers 2 wird der Spritzkopf 18 der - aus der Mitte heraus versetzten - Spritzeinheit 9 von dem die Spritzgießform darstellenden ersten Werkzeug 11 weggefahren und auch die Schließplatte 15 in die in Figur 1 gezeigte Position zurückbewegt. Die Werkzeughälften sind damit geöffnet, und von einer Außerbetriebsstellung kann eine in Richtung des Doppelpfeils 19 hin- und herbewegliche, aus Platten 20 bestehende Heizvorrichtung 21 in die Schließeinheit 10 zwischen die beiden Werkzeughälften 11a, 11b - alternativ 12a, 12b - eingefahren werden, um den fertiggestellten, in der Werkzeughälfte 11a verbliebenen Grundkörper 2 einseitig soweit zu erhitzen, daß seine Außenschicht ggfs. sogar schmelzflüssig, zumindest gut klebend wirkt. Dies wird dadurch erreicht, daß die außerhalb der Schließeinheit 10 zuvor aufgeheizten, in ihrer Form der Kontur des Grundkörpers 2 bis 6 angepaßten Heizplatten 20 der Heizvorrichtung 21 ihre gespeicherte Wärme durch Konvektion an den Grundkörper abgeben, wie sich im einzelnen aus Figur 10 ergibt.

Es wird dann die Heizvorrichtung 20 aus der Schließeinheit 10 herausgefahren und der Drehtisch 17 um 180° verdreht, so daß die Werkzeughälfte 11a mit dem Grundkörper 2 in die vorher von der Werkzeughälfte 12a eingenommene Position und die Werkzeughälfte 12a entsprechend in die vorher von der Werkzeughälfte 11a eingenommene Position gelangt; die Werkzeughälften 11a, 12a sind wegen ihrer temporären Zuordnung zu entweder der Werkzeughälfte 12b oder der Werkzeughälfte 11b übereinstimmend ausgebildet. Hingegen sind die schließseitigen Werkzeughälften 11b, 12b unterschiedlich, da nämlich die Werkzeughälfte 12b die Preßform-Werkzeughälfte darstellt, mit der die zugeführte Deckschicht 7 in der Preßform-Position I an den von der Werkzeughälfte 12a aufgenommenen Grundkörper 2 angepreßt wird, während gleichzeitig in der Spritzgießposition II in dem Formhohlraum der geschlossenen Werkzeughälften 11b, 12b ein neuer Grundkörper 2 hergestellt wird. Es versteht sich, daß während des Pressens und Spritzgießens die Schließplatte 15 abweichend von der Darstellung gemäß Figur 1 in die die Werkzeughälften schließende Betriebslage bewegt worden ist. Somit kann in jedem Arbeitstakt der Spritzgießmaschine 1 sowohl ein Grundkörper 2 als auch gleichzeitig ein in vorherigen Takt geformter Grundkörper 2 mit der Deckschicht 7 zu einem laminierten Kunststoff-Formteil 8 verpreßt werden, wobei das jeweils fertiggestellte laminierte Kunststoff-Formteil 8 vor einem erneuten Arbeitstakt aus der Schließeinheit 10 entnommen wird.

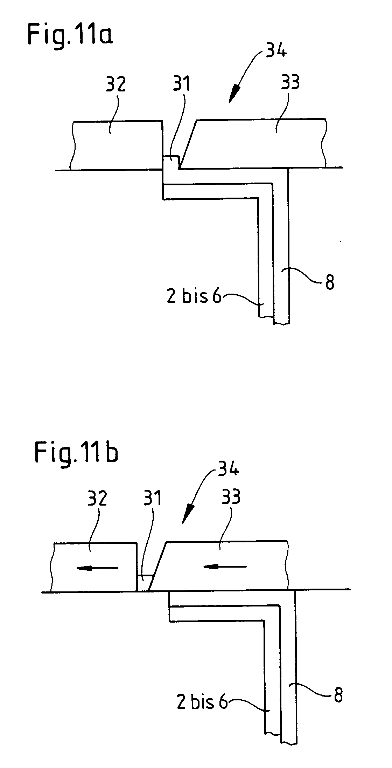

Zum Besäumen der überstehenden Ränder 31 der auf einen Grundkörper 2 bis 6 laminierten Deckschicht 8 befindet sich - wenn kein Umbug vorhanden ist - in der düsenseitigen Werkzeughälfte 12b der Preß- bzw. Prägefrom ein aus einem beweglichen Gegenhalter 32 und einem Schneidschieber 33 bestehndes Stanzwerkzeug 34 (vgl. die Figuren 11a und 11b); alternativ läßt sich auf dem Drehtisch 17 als dritte Station eine Stanzvorrichtung und ggfs. dieser nachgeschaltet eine vierte Station, nämlich zum Entformen des Kunststoff-Formteils 8, anordnen.

Die Spritzgießmaschine 100 nach Figur 2 unterscheidet sich von der zuvor beschriebenen Spritzgießmaschine 1 lediglich dadurch, daß die Spritzeinheit 9 in der Trennebene der Werkzeughälften 11a, 11b bzw. 12a, 12b angeordnet ist und die Einspritzung entweder in L-Stellung von oben oder aus einer anderen Position heraus erfolgt.

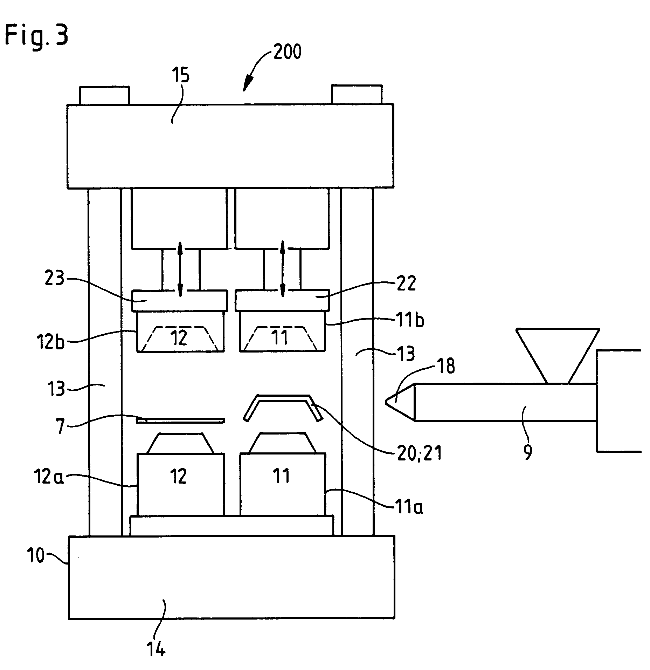

Die in Figur 3 gezeigte Spritzgießmaschine 200 stimmt in der Verfahrensweise bzw. in den Verfahrensschritten zum Herstellen laminierter Kunststoff-Formteile 8 mit den bzw. denen nach den Figuren 1 und 2 völlig überein, das heißt bei jedem Öffnen der Schließeinheit 10 wird aus dem Werkzeug 1 ein Grundkörper 2 bis 7 zusammen mit der ihn tragenden Werkzeughälfte 11a oder 12a in die Preßform-Position I gebracht, aus der zuvor das laminierte Kunststoff-Formteil 8 aus dem Werkzeug 12 entnommen worden ist. Im Unterschied zu den Spritzgießmaschinen 1, 100 besitzt die Spritzgießmaschine 200 eine vertikal schließende Schließeinheit 10, das heißt die Schließplatte 15 wird auf vertikal angeordneten Säulen 13 geführt. Außerdem ist für jede schließseitige Werkzeughälfte 11a, 12a eine eigene Schließplatte 22, 23 vorgesehen, so daß sich die Werkzeughälften 12a der Spritzgießform und 12b der Preßform unterschiedlich fahren lassen, bspw. können Geschwindigkeit und Druck unabhängig eingestellt werden. Bei dieser Ausführung ist es daher nicht erforderlich, der Preßform-Werkzeughälfte 12b ein Anstellmittel zuzuordnen, um bei abweichender Dicke des für die Deckschicht 7 zugeführten Materials einen Ausgleich des Abstandes zwischen den beiden Werkzeughälften 12b, 12a bzw. 12b, 11a vornehmen zu können. Das ist hingegen bei den Spritzgießmaschinen nach Figur 1 und Figur 2 der Fall, denen zu diesem Zweck ein in Figur 9 als Anstellkeil 24 ausgebildetes Anstellmittel für die Formpreß-Werkzeughälfte 12b zugeordnet ist.

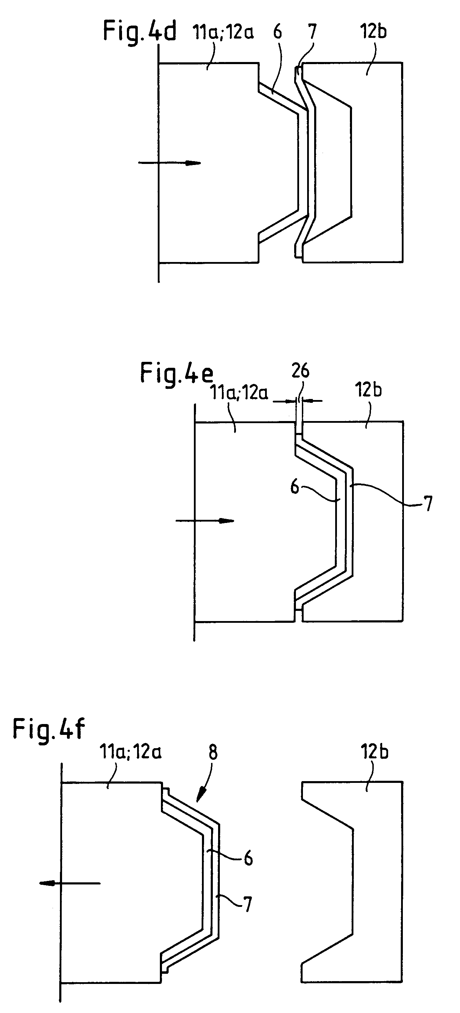

In den Figuren 4a bis 4g ist das Spritzgießverfahren zum Herstellen eines laminierten Kunststoff-Formteils 8 in einzelnen Schritten vereinfacht gezeigt. Die Spritzeinheit 9 hat über ihren Spritzkopf 18 und einen in der Werkzeughälfte 11b vorgesehenen Angußkanal 25 den Kunststoff in den Formhohlraum der geschlossenen Werkzeughälften 11b, 11a bzw. 11b, 12a eingebracht, so daß ein dem Grundkörper 2 entsprechender Grundkörper 6 entstanden ist (vgl. Figur 4a). Die Werkzeughälften werden danach auseinandergefahren, die Heizvorrichtung 21 mit ihren konturangepaßten Platten 20 zwischen die geöffneten Werkzeughälften eingefahren und über dem Grundkörper 6 positioniert (vgl. Figur 4b). Nach einer angemessenen Aufheizzeit wird die Heizvorrichtung 21 zurückgefahren und die Werkzeughälfte 11a bzw. 12a mit dem von ihr getragenen Grundkörper 6 in die Preßform-Position I geschwenkt bzw. verdreht, in der bei von der Werkzeughälfte 11a bzw. 12a entfernter Preßform-Werkzeughälfte 12b das Material der Deckschicht 7 zugeführt wird (vgl. Figur 4c). Durch Schließen der Werkzeughälften 12b, 11a bzw. 12a gemäß den Figuren 4d und 4e wird sodann die Deckschicht 7 an den Grundkörper 6 angepreßt, wobei der Abstand 26 zwischen den Werkzeughälften 12b und 11a bzw. 12a mittels nicht dargestellter Abstandshalter oder dem in Figur 9 gezeigten Anstellkeil 24 eingehalten wird. Es brauchen dann nur noch die Werkzeughälften 12b und 11a bzw. 12a auseinandergefahren (vgl. Figur 4f) und das fertig laminierte Kunststoff-Formteil 8 (vgl. Figur 4g) von der Werkzeughälfte 11a bzw. 12a abgenommen zu werden.

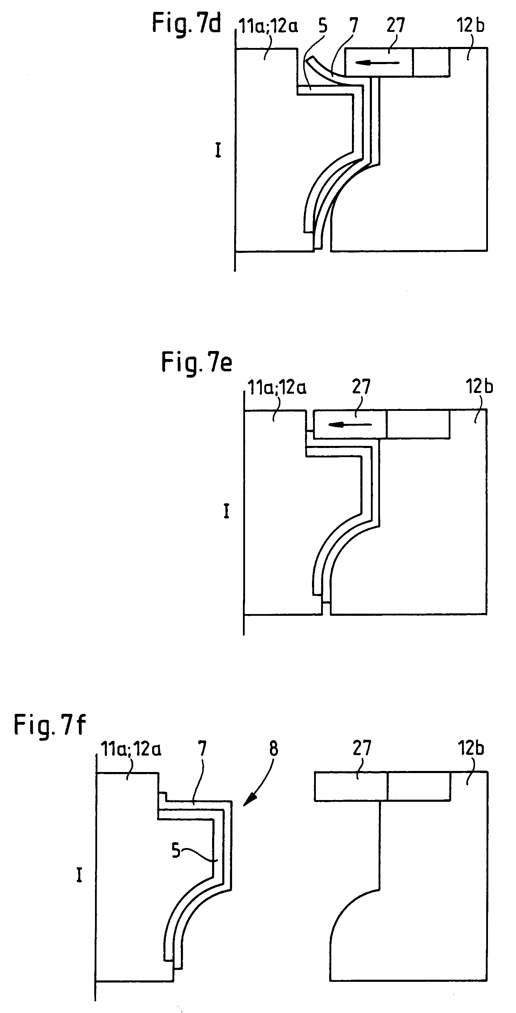

In derselben Weise wie zuvor beschrieben laufen die Verfahrensschritte beim Laminieren eines eine fast parallel zur Öffnungsbewegung zu spritzende Fläche aufweisenden Grundkörpers 5 (vgl. Figur 6) gemäß den Figuren 7a bis 7g (letztere zeigt das fertig laminierte Kunststoff-Formteil 8) ab. Allerdings besitzt die Preßform-Werkzeughälfte 12b zum Kaschieren bzw. Prägen der Deckschicht 7 aufgrund der parallel abgewinkelten Fläche des Grundkörpers 5 einen dazu parallel beweglichen Schieber 27, der dazu beiträgt (vgl. die Figuren 7d und 7e), die Deckschicht 7 entsprechend der vorgegebenen Kontur des Grundkörpers 5 auch mit der parallel zur Öffnungsbewegung abgewinkelten Fläche innig zu verbinden. Eine andere Lösung sieht vor, daß jedem Schiber 27 zwei - nicht dargestellte - Antriebe zugeordnet sind und der Schieber 27 unter einem Winkel mit allmählich enger werdendem Spalt zur Kontur des Grundkörpers 2 bis 6 und der Deckschicht 7 bewegt wird. Einhergehend mit dem Kaschiervorgang kann ein Stanzwerkzeug 34 (vgl. Figur 11a, 11b) die überstehenden Ränder der Deckschicht 7 abtrennen.

In den Figuren 8a bis 8d ist gezeigt, wie sich mit den Spritzgießmaschinen 1, 100, 200 ein laminiertes Kunststoff-Formteil 8 mit einem Umbug 28 der Deckschicht 7 herstellen läßt, und zwar im gezeigten Beispiel für die obere Ecke der Grundkörper 2 bis 6. Da die nicht dargestellte Preßform-Werkzeughälfte 12b des Werkzeugs 12 nur die Kaschierungen vornimmt und nicht für große Drücke ausgelegt zu werden braucht, lassen sich in ihr verschiebbare Einsätze 29, 30 anordnen, die im noch geschlossenen Zustand des Werkzeugs das Material (Stoff, Folie, Textil, Teppich etc.) der Deckschicht 7 so in die Richtung bringen, daß der Umbug 28 entsteht. Gemäß Figur 8a wird der Grundkörper 2 bis 6 zunächst mit der Deckschicht 7 kaschiert, worauf ein verschiebbarer Einsatz 29 - nach dem Zurückfahren eines entsprechenden, nicht dargestellten Gegenschiebers - vorfährt (vgl. Figur 8b). Danach fährt der verschiebbare Einsatz 29 gemäß Figur 8c zurück und ein dazu vertikal verschiebbarer Einsatz 30 nach unten, der das Umbiegen der Deckschicht und damit das Herstellen des Umbugs (vgl. Figur 8d) bewirkt. Der Umbug 28 kann dabei bereits unmittelbar nach dem Schließen des zweiten Werkzeugs 12 und erfolgter Kaschierung hergestellt werden, so daß der Grundkörper 2 bis 6 noch die erforderliche hohe Oberflächentemperatur besitzt, um eine ausreichende Haftung zu gewährleisten.

### Liste der Bezugszeichen

- 1, 100, 200, 300: Spritzgießmaschine
- 2: Grundkörper
- 3: Grundkörper
- 4: Grundkörper
- 5: Grundkörper
- 6: Grundkörper
- 7: Deckschicht
- 8: Kunststoff-Formteil
- 9: Spritzeinheit
- 10: Schließeinheit
- 11: erstes Werkzeug
- 11a: schließseitige Werkzeughälfte
- 11b: düsenseitige Werkzeughälfte
- 12a: schließseitige Werkzeughälfte
- 12b: düsenseitige Werkzeughälfte
- 12: zweites Werkzeug
- 13: Säule
- 14: Maschinenplatte
- 15: Schließplatte
- 16: Drehpfeil
- 17: Drehtisch
- 18: Spritzkopf
- 19: Doppelpfeil
- 20: Platte
- 21: Heizvorrichtung
- 22: Schließplatte
- 23: Schließplatte
- 24: Anstellkeil
- 25: Angußkanal
- 26: Abstand
- 27: Schieber
- 28: Umbug
- 29: Schiebeinsatz
- 30: Schiebeeinsatz
- 31: Rand
- 32: Gegenhalter
- 33: Schneidschieber
- 34: Stanzwerkzeug
- I: Preßform-Position
- II: Spritzgieß-Position

## Patentansprüche

1. Verfahren zum Herstellen von laminierten Kunststoff-Formteilen, die aus einem spritzgegossenen Grundkörper aus thermoplastischem Kunststoff-Material und mindestens einer Deckschicht bestehen, wobei die den Grundkörper aufnehmende Werkzeughälfte der Spritzgießform temporär in Deckungslage mit einer komplementären Werkzeughälfte einer Preßform gebracht wird, die die Deckschicht gegen den Grundkörper preßt und an diesen laminiert,
**dadurch gekennzeichnet,**
daß zwischen dem Spritzgießen und dem laminierenden Präge- bzw. Kaschiervorgang die der Deckschicht zugewandte Seite des spritzgegossenen Grundkörpers aufgeheizt wird.

2. Verfahren nach Anspruch 1,
**dadurch gekennzeichnet,**
daß das Aufheizen gesteuert wird.

3. Verfahren nach Anspruch 1 oder 2,
**dadurch gekennzeichnet,**
daß mindestens zwei Paar von Werkzeughälften vorgesehen sind und der Präge- bzw. Kaschiervorgang im gleichen Arbeitstakt mit dem Schließen der Werkzeughälften der Spritzgießform durchgeführt wird.

4. Verfahren nach einem oder mehreren der Ansprüche 1 bis 3,
**dadurch gekennzeichnet,**
daß die Heizvorrichtung nach dem Öffnen der Spritzgießform zwischen deren oder den Werkzeughälften der Prägeform einfahrbar ist.

5. Verfahren nach einem oder mehreren der Ansprüche 1 bis 4,
**dadurch gekennzeichnet,**
daß der Abstand der Werkzeughälfte der Preßform zu den ihr temporär zugeordneten Werkzeughälften der Spritzgießform einstellbar ist.

6. Vorrichtung zum Durchführen des Verfahrens nach Anspruch 1,
**dadurch gekennzeichnet,**
daß einer Spritzeinheit (9) eine Schließeinheit (10) mit mindestens zwei Werkzeugen (11, 12) aus jeweils zwei Werkzeughälften (11b und 11a bzw. 12a; 12b und 11a bzw. 12a) zugeordnet ist, von denen eine Werkzeughälfte des zweiten Werkzeugs (12) als Preßform-Werkzeughälfte (12b) mit einer dem Grundkörper (2 bis 6) zuzüglich Deckschicht (7) entsprechenden Kontur ausgebildet und dem ersten Werkzeug (11) oder dem zweiten Werkzeug (12) eine zwischen die geöffneten Werkzeughälften einfahrbare Heizvorrichtung (21) zugeordnet ist.

7. Vorrichtung zum Durchführen des Verfahrens nach Anspruch 1,
**dadurch gekennzeichnet,**
daß die Heizvorrichtung (21) der Geometrie des Grundkörpers (2 bis 7) angepaßt ist.

8. Vorrichtung nach Anspruch 6 oder 7,
**dadurch gekennzeichnet,**
daß die Heizvorrichtung (21) aus Platten (20) aus gut leitendem Metall besteht und ihr in der Außerbetriebsposition, extern der Schließeinheit (10) Aufheizmittel zugeordnet sind.

9. Vorrichtung nach einem oder mehreren der Ansprüche 6 bis 8,
**dadurch gekennzeichnet,**
daß die der Preßform-Werkzeughälfte (12b) gegenüberliegenden Werkzeughälften (11a, 12a) auf einem drehbaren Tragelement (17) angeordnet sind.

10. Vorrichtung nach einem oder mehreren der Ansprüche 6 bis 9,
**dadurch gekennzeichnet,**
daß die Preßform-Werkzeughälfte (12b) mit einem Abstands-Stellmittel (24) versehen ist.

11. Vorrichtung nach einem oder mehreren der Ansprüche 6 bis 10
**gekennzeichnet durch**
mindestens einen in der Preßform-Werkzeughälfte (12b) angeordneten Schieber (27; 29, 30).

12. Vorrichtung nach Anspruch 11,
**dadurch gekennzeichnet,**
daß der/die Schieber (27, 29, 30) bezogen auf den Grundkörper (2 bis 6 bzw. 2 bis 6, 7) unter einem Winkel mit einem sich allmählich verengenden Spalt angeordnet sind.

13. Vorrichtung nach einem oder mehreren der Ansprüche 6 bis 12,
**dadurch gekennzeichnet,**
daß das Preßform- bzw. Kaschierwerkzeug (12) mit einem Stanzwerkzeug (34) versehen ist.

14. Vorrichtung nach einem oder mehreren der Ansprüche 6 bis 12,
**dadurch gekennzeichnet,**
daß dem Spritz- und Formwerkzeug (11, 12) ein Stanzwerkzeug (34) nachgeschaltet ist.

15. Vorrichtung nach Anspruch 13 oder 14,
**dadurch gekennzeichnet,**
daß den Werkzeugen (11, 12 bzw. 11, 12, 13) eine Entformungsstation nachgeschaltet ist.
